# EUROPÄISCHE PATENTSCHRIFT

(11) **EP 2 210 992 B1**
(45) Veröffentlichungstag und Bekanntmachung des Hinweises auf die Patenterteilung: **15.03.2017**
(21) Anmeldenummer: 10000492.8
(22) Anmeldetag: 20.01.2010
(51) Int. Cl.: E04B 5/48, F24D 3/16, F24F 13/24, F24F 5/00

(54) **Thermoaktive Fertigteilplatte mit Akustikabsorber**
Thermoactive pre-assembled plate with acoustic absorber
Plaque semi-finie thermoactive dotée d'un absorbeur acoustique

(30) Priorität: 21.01.2009 DE 102009005577
(43) Veröffentlichungstag der Anmeldung: 28.07.2010
(60) Teilanmeldung: 14001985.2
(73) Patentinhaber: Friedrich, Thomas, 54470 Bernkastel-Kues (DE)
(72) Erfinder: Friedrich, Thomas, 54470 Bernkastel-Kues (DE)
(74) Vertreter: Riebling, Peter

(56) Entgegenhaltungen:
- DE-A1- 4 027 833
- DE-A1- 10 341 761
- DE-A1-102005 054 480
- DE-B3-102007 007 290
- DE-U1- 20 221 176

## Beschreibung

Die Erfindung betrifft eine thermoaktive Fertigteilplatte mit zusätzlichen Funktionselementen nach dem Oberbegriff des Patentanspruches 1.

Thermoaktive Fertigteilplatten werden im Gewerbebau zur Erstellung großflächiger Gebäude verwendet. Eine solche thermoaktive Betonplatte ist im Wesentlichen eine im Fertigteilwerk hergestellte Betonplatte, in deren Innenbereich bereits schon Rohrleitungsregister verlegt sind, durch welche wahlweise ein gekühlter oder ein geheizter Medienstrom hindurchgeführt werden können.

Ein solches Betonelement ist mit der DE 10 2005 054 480 A1 offenbart und zeigt ein monolithisch gefertigtes plattenförmiges Betonelement mit oberflächennah integriertem, schallschluckendem und thermisch leitendem, vorzugsweise metallischen Absorptionselement, das bei der Fertigung in die Gießform eingelegt und vergossen werden kann. Nachteilig an diesem Betonelement, ist die relativ träge Regelung der Temperatur, da die Rohrleitungsregister im Betonmaterial verlegt sind und deshalb ein Wärmeübergang im Beton notwendig ist, um die dort erzeugte Wärme oder Kühlenergie an den Raum abzugeben.

Der einfacheren Beschreibung wegen wird im Folgenden davon ausgegangen, dass es sich um ein flüssiges Medium handelt, welches sowohl geheizt als auch gekühlt sein kann. Die Erfindung betrifft selbstverständlich auch gasförmige Medien als Wärmeträgermedien, die durch solche Rohrleitungsregister hindurchgeführt werden können.

Vorteil derartiger thermoaktiver Fertigteilplatten ist, dass sie durch die Integration der Rohrleitungsregister in den Aufbau der jeweiligen Betonplatte bereits schon die Möglichkeit vorsehen, dass eine Deckenheizung entweder als Kühl- oder als Heizdecke ausgebildet sein kann.
Weiterer Vorteil ist, das keinerlei Vorkehrungen auf der Baustelle beim Verlegen der Fertigteilplatte getroffen werden müssen, es muss lediglich dafür gesorgt werden, dass die an der einen Seite der Fertigteilplatte herausgeführten Anschlüsse der Rohrleitungsregister mit den entsprechenden Wärmeträger- oder Kühlträgermedien verbunden werden.
Solche thermoaktiven Fertigteilplatten haben sich im großen Umfang im Gewerbebau bewährt; es wird jedoch als nachteilig empfunden, dass die akustischen Dämmeigenschaften solcher Fertigteilplatten ungenügend sind. Nachdem die Deckenseite eine harte Schale darstellt, ist eine unerwünscht hohe Schallreflexion im Raum gegeben. Man hat sich bisher damit beholfen, dass man vor die Deckenfläche eine abgehängte Decke aus gelochten Metallplatten oder Gipskartonplatten befestigte. Damit war jedoch ein erhöhter Aufwand verbunden.
Der Erfindung liegt deshalb die Aufgabe zugrunde, eine thermoaktive Fertigteilplatte der eingangs genannten Art so weiterzubilden, dass mit geringerem Aufwand verbesserte Schalldämmwerte erreicht werden.
Zur Lösung der gestellten Aufgabe ist die Erfindung durch die technische Lehre des Anspruches 1 gekennzeichnet.

### I. Verbessertes Schalldämmmaß durch Anwendung der Funktionsplatte:

Wesentlich ist, dass die Fertigteilplatte verbesserte akustische Dämmeigenschaften entfaltet. Dies wird dadurch bewerkstelligt, dass in der Deckenseite der Fertigteilplatte eine Aussparung angeordnet ist, die von einer Multifunktionsplatte abgedeckt ist.

Dies ist ein wesentlicher Unterschied zu den bekannten Blechplatten, die als Kassettendecke unter eine Betonfertigteilplatte gehängt werden, weil nach der Lehre des Hauptanspruches eine Multifunktionsplatte in den Aufbau der unteren Betonschale der Fertigteilplatte integriert ist. Es handelt sich also um eine deckenbündige Integration einer Multifunktionsplatte, die mit der Deckenseite der unteren Betonschale fluchtet.

Mit der deckenbündigen Integration einer Funktionsplatte, die einen deckenseitigen flachen Hohlraum in der unteren Betonschale flächenbündig abdeckt, wird eine wesentliche Verminderung von Schallreflexionen an der Deckenseite der Fertigteilplatte erreicht. In einer bevorzugten Ausgestaltung beträgt das Flächenverhältnis der unbewehrten Fertigteilplatte im Verhältnis zur Fläche der Multifunktionsplatte etwa 15-30 % bevorzugt 20 %. Damit wird nur ein Teil der Schallwellen an der unbewehrten Fläche der Deckenseite der Fertigteilplatte reflektiert, während der andere Teil an der Oberfläche der Funktionsplatte zum überwiegenden Teil geschluckt wird.

Ein besonders gutes Schallschluckvermögen ergibt sich dann, wenn eine mikroperforierte Metallplatte als Funktionsplatte verwendet wird. Ein Teil des Schalls tritt durch die Mikroperforationen hindurch und trifft auf die rückseitige Betonfläche, welche die Aussparung in der deckenseitigen Betonschale definiert. Dort wird der Schall erneut reflektiert und trifft auf die Rückseite der Funktionsplatte, wo er Schall geschluckt wird.

Die Verwendung einer Funktionsplatte, als Schallschluckplatte ergibt den weiteren Vorteil, dass es nun erstmals möglich ist, die von der Funktionsplatte in der unteren Betonschale abgedeckte Ausnehmung zu belüften und zu temperieren.

### II. Verbesserte Raumtemperatur-Regelung durch Anwendung der Funktionsplatte:

Ein Merkmal der Erfindung ist, dass eine wesentlich schnellere Temperaturregelung und eine günstigere Abgabe einer Kühl- oder Heizenergie von der thermoaktiven Fertigteilplatte in den Raum gegeben sind.

Bisher war eine Regelung der Temperatur nur relativ träge, weil die Rohrleitungsregister im Betonmaterial verlegt sind und deshalb ein Wärmeübergang im Beton notwendig ist, um die dort erzeugte Wärme oder Kühlenergie an den Raum abzugeben.

Es besteht daher vermehrt das Bedürfnis, solche thermoaktiven Fertigteilplatten mit einer schnelleren Temperaturregelung zu versehen.

Wesentliches Merkmal der Erfindung ist, dass die thermoaktive Fertigteilplatte mindestens aus zwei parallel zueinander angeordneten Betonschalen besteht, zwischen denen ein Hohlraum ausgebildet ist, der mit einem Dämmmaterial befüllt ist und dass ferner oberhalb der unteren Betonschale mindestens teilweise in der Fertigteilplatte ein Luftkanal verlegt ist, dessen Längserstreckung sich parallel zur Längserstreckung der Fertigteilplatte erstreckt und welcher Luftkanal luftschlüssig mit einer Ausnehmung in der unteren Betonplatte verbunden ist, die deckenseitig durch die Funktionsplatte abgedeckt ist, sodass die in dieser Ausnehmung in den Zwischenraum zwischen der Funktionsplatte und der unteren Betonschale einströmende Luft lediglich nur noch in der Nähe der fassadenseitig angeordneten Fenster durch Schlitzauslässe ausströmt.

Mit der gegebenen technischen Lehre ergibt sich der Vorteil, dass eine thermoaktive Fertigteilplatte eine schnelle Temperaturregelung erlaubt. Es wird nämlich zusätzlich ein temperierbarer Luftstrom durch den Zwischenraum zwischen der oberen und der unteren Betonschale hindurchgeführt und dieser Luftstrom berührt mindestens teilweise die deckenseitig angeordnete Funktionsplatte, die in der Fertigteilplatte an deren Unterseite eingebaut ist, wobei lediglich in der Nähe des Fensters angeordnete Schlitzauslässe in der Decke vorhanden sind.

Damit ergibt sich der wesentliche Vorteil, dass nun die Temperierung der Fertigteilplatte mit der Temperierung eines schnell temperierbaren Luftstromes kombiniert ist

Um nun die Temperatur dieses Luftstromes möglichst schnell in den Raum einleiten zu können, ist es erfindungsgemäß vorgesehen, dass der Luftstrom entlang der Funktionsplatte strömt, und zwar entlang eines Zwischenraumes, der sich einerseits im Bereich der unteren Betonschale der Fertigteilplatte und andererseits an der Oberseite der Funktionsplatte ergibt.

Auf diese Weise wird die Wärme oder Kühlenergie des Luftstromes sehr schnell an die gut wärmeleitend ausgebildete Funktionsplatte abgegeben, welche sozusagen als schnell temperierbare Deckenplatte die Wärme oder Kälteenergie durch Wärmestrahlung in den Raum einträgt.

Solche Funktionsplatten sind jedoch schwierig zu realisieren, denn sie haben den Nachteil, dass sie ein relativ ungünstiges Schalldämmvermögen haben. Aus diesem Grund sieht die Erfindung vor, dass die Funktionsplatte aus einem mikroperforierten Blechmaterial besteht, welche Mikroperforationen dafür sorgen, dass der Schall eine mehrfach gebrochene Oberfläche vorfindet und deshalb keine direkte Schallreflexion an der Multifunktionsplatte stattfindet.

Weiterer Vorteil ist, dass durch die bevorzugte Ausbildung der Multifunktionsplatte als Metallplatte ein sehr guter Wärmeübergang der geheizten oder gekühlten Luft auf diese Multifunktionsplatte gegeben ist, die ihrerseits die Wärme oder Kälte sehr günstig als Wärme- oder Kältestrahler deckenseitig in den Raum einbringen kann.

Die Multifunktionsplatte ist also ein Schallschluckelement, welches die akustischen Eigenschaften der Fertigteilplatte wesentlich verbessert. Wichtig ist nämlich, dass der Raum deckenseitig nun nicht mehr durch eine vollflächige (harte) Fertigteilplatte abgedeckt ist, welche ein relativ schlechtes Schalldämmmaß hat, sondern dass in diesem Bereich nun eine Ausnehmung in der Fertigteilplatte angeordnet ist, die von der schalldämmenden Multifunktionsplatte abgedeckt ist. Die in der Unterseite der unteren, zur Raumseite gerichteten Fertigteilplatte angeordnete Ausnehmung ist bevorzugt im Querschnitt halboffen. Dies bedeutet, dass sie einen etwa U- oder C-förmigen Querschnitt aufweist und die offene Seite dieses Profils zum Raum hin gerichtet ist. Der Profilquerschnitt kann jedoch auch halbrund oder halbelliptisch sein.

Hierbei wird es bevorzugt, wenn bezogen auf eine Fläche von etwa 100 % einer Fertigteilplatte, die in der Decke eines Raumes eingebaut ist, die Multifunktionsplatte etwa eine Fläche von 20 % (im möglichen Bereich von etwa 10 bis 40 %) der Fläche der Fertigteilplatte einnimmt.

Bezogen auf eine Fertigteilplatte mit den Abmessungen von 2,70 m x 6,50 m hat eine solche Multifunktionsplatte eine Deckenfläche von etwa 2,1 m x 0,60 cm.

Diese Fläche reicht aus, das Schalldämmmaß der Fertigteilplatte wesentlich zu verbessern und insbesondere unerwünschte deckenseitige Schallreflexionen an der Unterseite einer solchen Fertigteilplatte zu vermeiden.

Es werden demzufolge die Merkmale einer schnellen Temperaturregelung über einen schnell regelbaren Luftstrom mit den Merkmalen einer Deckenheizung oder Deckenkühlung verbunden, wobei diese Luftkühlung oder Heizung lediglich auf die genannte Multifunktionsplatte wirkt, die demzufolge als Heiz- oder Kühlelement und gleichzeitig auch als Schallschluckelement dient.

Dies ist ein wesentlicher Vorteil gegenüber dem Stand der Technik und war bisher noch nicht bekannt.

In einer bevorzugten Ausgestaltung der vorliegenden Erfindung ist demzufolge die Funktionsplatte aus einem mikroperforierten Blech ausgebildet, wobei eine Blechstärke von etwa 1 bis 2 mm verwendet wird und der Lochanteil der Mikroperforationen bezogen auf die Fläche der Multifunktionsplatte lediglich einen Anteil von 5 bis 6 % einnimmt.

Es wird bevorzugt, wenn die erfindungsgemäße Funktionsplatte eine Ausnehmung in der unteren Betonschale der Fertigteilplatte überdeckt, wobei diese Ausnehmung dann lediglich eine Höhe von etwa 5 cm aufweist. Diese Ausnehmung wird demzufolge von dem temperierbaren Luftstrom durchströmt, der von der Rückseite her die Multifunktionsplatte kühlt oder heizt.

Weiter wird bevorzugt, wenn die untere Betonschale in diesem Bereich nicht vollständig unterbrochen ist, sondern lediglich eine Ausnehmung zeigt, die zur Deckenseite hin durch die besagte Funktionsplatte abgedeckt ist. Es bleibt deshalb ein Stegbereich von z. B. 3 bis 5 cm Dicke in der Betonschale übrig, und es ist in einer Weiterbildung der Erfindung vorgesehen, dass auch in diesem dünnen Bereich Rohrleitungsregister verlegt sind, die ansonsten lediglich nur noch im dickeren Bereich der Betonschale, d. h. also außerhalb der Ausnehmung, verlegt sind.

Damit kann über die in diesem Stegbereich verlegten Rohrleitungsregister der Hohlraum unmittelbar zusätzlich - neben der temperierten Luftführung - über die in der Betonschale verlegten Rohrleitungsregister temperiert werden.
Im Abschnitt I wurden die besonderen Eigenschaften der Funktionsplatte beim Einbau in eine Fertigteilplatte beschrieben. Im Abschnitt II wurden die Eigenschaften der Funktionsplatte als Lüftungs- und Temperierelement beschrieben.

In einer weiteren Ausbildung der vorliegenden Erfindung ist nämlich vorgesehen, dass in der vorher beschriebenen Fertigteildecke weitere Akustikabsorber eingebaut sind.
In dem vorher genannten Ausführungsbeispiel waren die Akustikabsorber bereits schon in Form einer Funktionsplatte ausgebildet, an deren einen Seite Schlitzauslässe vorhanden waren, welche die über die Funktionsplatte an der Innenseite geleitete Luft in den Raum ausließen.

### III. Verbesserung des Schalldämmmaßes durch Akustikabsorber

Es hat sich nun herausgestellt, dass das Schalldämmmaß einer derartigen Decke noch wesentlich verbessert werden kann und zwar durch die folgenden Maßnahmen:

Thermoaktive Decken klimatisieren über Ihre Oberfläche die darunter liegenden Räume. Sowohl das Heizen als auch das Kühlen der Räume ist möglich. Gegenüber der klassischen Betondecke mit Vollquerschnitt arbeitet der Sandwichquerschnitt der erfindungsgemäßen Decke bedeutend effizienter, denn nur die untere dünne Betonschale der Fertigteildecke dient zur Abgabe bzw. Aufnahme der Wärmeenergie. Diese dünne Betonschale speichert die thermische Energie, die über die nahe der Oberfläche angeordneten Rohrleitungen rasch zugeführt bzw. rasch abgeführt wird. Für die Energieübertragung an den darunter liegenden Raum wird die gesamte Oberfläche der Betondecke genutzt, um somit selbst bei niedrigen Temperaturen über eine große Fläche die gewünschte Klimatisierung zu erzielen.

Die glatte Betonoberfläche dient idealerweise für die vorgenannte Energieübertragung vom Beton an den Raum. Nachteilig wirkt sich die glatte Oberfläche auf die Schallabsorption aus, denn die im Raum erzeugten Schallwellen werden an der harten Oberfläche reflektiert und in den Raum zurückgeworfen. Zur Dämpfung der Schallwellen kann die Betondecke keinen nennenswerten Beitrag liefern. Für diese Aufgabe sind vorrangig poröse Werkstoffe geeignet, die die Schallwellen schlucken und somit den Geräuschpegel im Raum reduzieren. Poröse Werkstoffe haben je nach Raumgewicht jedoch eine deutlich geringere Wärmeleitfähigkeit als der Beton und verzögern bzw. reduzieren demzufolge die Übertragung der Energie aus dem Beton an die Oberfläche. Konsequenterweise geht damit einher eine geringere Leistung der Decke zum Kühlen und Heizen.

Ein Akustikabsorber für thermoaktive Decken muss somit zwei Funktionen erfüllen, er muss die Schallwellen absorbieren und er darf die thermische Leistung der Decke nicht einschränken. Um diese Aufgabe zu erfüllen, wurden entsprechende Akustikabsorber aus metallischem Werkstoff entwickelt. Diese Elemente sind dann in der Lage, die Wärmeenergie dem Beton rasch zu entziehen bzw. rasch einzulagern, um die Energie dann über deren eigene Oberfläche an die Umgebung abzugeben.

Mit dieser Technik wird die Wärmeübertragung vom Speichermedium Beton an die Umgebung nicht reduziert, sondern noch gesteigert. Denn durch die Vertiefungen für den Einbau der Absorber wird die zur Übertragung der Energie zur Verfügung stehende Betonoberfläche entsprechend vergrößert. Über den Kontakt mit dem Absorber erfolgt der rasche Austausch zwischen Betonspeicher und Oberfläche der Decke.

Die Akustikabsorber werden in der Decke gemäß einem geeigneten Muster angeordnet. Im Vordergrund der Anordnung stehen streifenförmige Absorberelemente, die in entsprechendem Abstand zueinander angeordnet werden. Für die üblichen Büroabmessungen mit Tiefen von bis zu 6.00m und Ausbaurastern von 1.25m bis 1.50m (i.d. Regel 1.35m) wurde eine entsprechende Belegung untersucht und gemäß den nachstehenden Varianten mit Absorberelementen bestückt. Das wiederkehrende Belegungsmuster wird auf ein Ausbauraster ausgelegt, und dann auf die übrigen Achsen angewendet.

Innerhalb eines Deckenfelds mit der Breite eines Ausbaurasters und der Tiefe eines Standardbüros werden die streifenförmigen Absorber parallel zu den Ausbauachsen (Bürotrennwänden) angeordnet. Der jeweilige Streifen verläuft über die Tiefe des Büros.

Beginnend von der Ausbauachse werden in geringen Abstand zueinander jeweils zwei bzw. drei Streifen angeordnet. Die Zone um die Achse selbst bleibt frei, um dort beliebig die Trennwände befestigen zu können. Aus Montagegründen werden die streifenförmigen Absorberelemente nicht als eine Einheit für die gesamte Bürotiefe gefertigt, sondern in zwei gleich lange Elemente geteilt.

Mit der Anzahl der Streifen pro Ausbauachse wird die Qualität des Absorptionsverhaltens bestimmt. Ergänzend zu den Streifen lassen sich einzelne plattenförmige Absorberelemente mit der Breite etwa eines Ausbaurasters jeweils in der Nähe der Fassade bzw. dem Flurkoffer anordnen. Um die Breite dieser Plattenabsorber bleiben die streifenförmigen Absorber dann entsprechend zurück.

Im Hallraum wurden die folgenden vier Varianten untersucht:
- Variante 1: vier Streifen pro Ausbauraster + je ein großflächiges Absorberelement an der Fassade und zum Flurkoffer hin;
- Variante 2: sechs Streifen pro Ausbauraster + je ein großflächiges Absorberelement an der Fassade und zum Flurkoffer hin;
- Variante 3: vier Streifen pro Ausbauraster über die gesamte Bürotiefe;
- Variante 4: sechs Streifen pro Ausbauraster über die gesamte Bürotiefe;

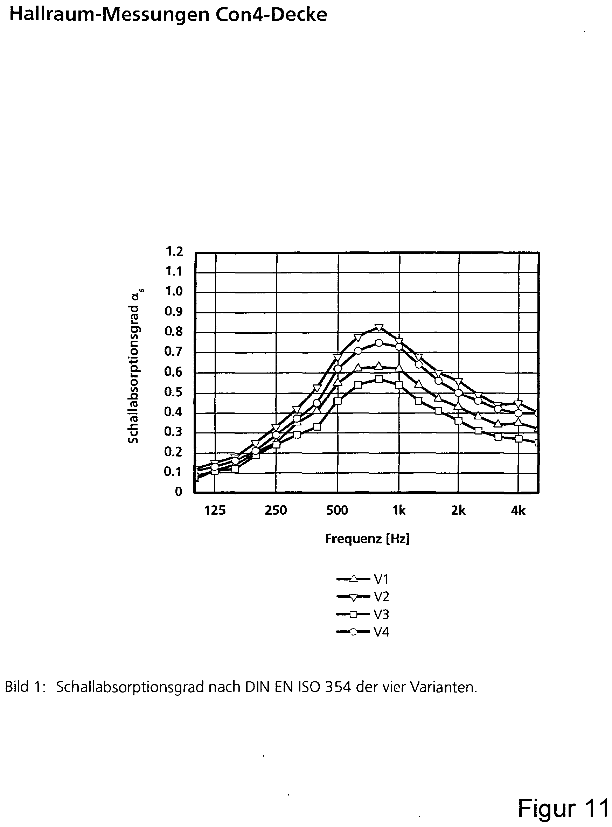

Entsprechend diesen Varianten wurden die Fläche mit den jeweiligen Absorbern im Hallraum geprüft und die Messungen für den Schallabsorptionsgrad für die jeweilige Frequenz ermittelt. Das Ergebnis für die vier Varianten ist dem beigefügten Diagramm der Figur 11 zu entnehmen. Aufgrund der Gesamtdarstellung aller Varianten lässt die Wirkung der jeweiligen Anordnung auf das Absorptionsverhalten deutlich erkennen.

Die Anordnung der jeweiligen Absorber erzeugt in der Decke bezogen auf das Ausbauraster entsprechende wiederkehrende Muster. Diese Muster wurden für die Varianten 1 und 3 für einen Bürokörper mit mittiger Fluranordnung (ein abgehängter Flurkoffer ist mit dargestellt) perspektivisch dargestellt, um einen Eindruck von der Belegung der Deckenfläche mit den Absorberstreifen zu vermitteln.

Im Vordergrund der Erfindung steht die Aufgabe, möglichst viel Energie über die Lochplatte des Absorbers an den Raum abzugeben. Dabei hat sich klar gezeigt, dass die Wärmeenergie aus den Rohren nur dann schnell und in großem Masse über den Werkstoff Stahl geleitet werden kann, wenn das Rohr direkt an dem Stahl anliegt, über den es fortgeleitet werden soll. Das jedoch ist nur möglich, wenn das Absorberelement aufgeteilt wird und zwar in einen Anteil, der im Beton im Werk einbetoniert wird und dort verbleibt und der andere Teil als flexibles Element nachträglich montiert wird. Das wiederum kommt dem Ausschalen entgegen.

Der gesamte Schalköper soll somit zukünftig aus zwei Teilen bestehen. Der untere Teil besteht aus der Grundplatte mit darauf angeordneten einzelnen Stegen. Dieser Teil ist und bleibt für den mehrmaligen Gebrauch wieder verwendbar. Der obere Teil besteht aus einem gekanteten Blech und dient als eine verlorene Schalhaut, die mit einbetoniert wird. Dieses Element sollte allerdings seitlich einige Halterungen haben, auf denen das Heizungsrohr aufgelegt und fixiert werden kann. Ergänzend sind an weiteren Stellen so genannte Druckpunkte angebracht, in die der spätere Akustikabsorber eingeklickt werden kann.

Mit dieser Technik werden gleich mehrere Anforderungen erfüllt:
- die Schalung ist einfach aufgebaut und sicher auszuschalen;
- das Blech als verlorene Schalung in Verbindung mit den Halterungen für die seitlichen Rohrleitungen leitet die Energie schneller und besser aus und in das Blech bzw. von dort in den Beton. Durch den engen Kontakt mit dem einzusetzenden Absorber, steht Blech mit Blech in Verbindung und so wird die Wärmeenergie rasch von der Rohrleitung an die Oberfläche in das Lochblech geleitet.
- die vorgesehenen Druckpunkte (oder eine abgewandelte Variante davon) stellt gleichzeitig die Verriegelung für den einzusetzenden Absorber dar (kein Dübel und keine Schraube sind mehr erforderlich, und dadurch vereinfacht sich die Montage maßgeblich)

Das Blech als verlorene Schalung soll ein einfach gekantetes Blech geringer Wandstärke sein. Die Belastung aus Betongewicht wird durch die auf dem unteren Teil eingebauten Stege (Querschotte) aufgenommen. Das Blech liegt auf den Querschotten auf und spannt für die Einwirkung aus Beton von Querschott zu Querschott. Für den Korrosionsschutz sollte dieses Blech verzinkt sein. Die seitlichen Halterungen sollten nicht durchlaufend, sondern als Einzelelemente in entsprechendem Abstand an dem gekanteten Blech fixiert werden. Dabei ist auch eine Steckverbindung von Blech zu Blech denkbar. Die Enden des Blechs sollten mit einem Blechelement vom Querschnitt des gekanteten Profils geschlossen werden. Auf eine Schrägstellung dieses Blechs kann verzichtet werden, da es nicht ausgeschalt werden muss.
Das untere Teil des Schalkörpers wird wie bisher mit Magneten auf dem Schaltisch fixiert. Über die Querschotte des unteren Teils wird der obere Teil des Schalkörpers gestülpt und an dem unteren Teil fixiert. Die Fixierung muss nicht nur kraftschlüssig sondern auch dicht sein, damit kein Beton eindringen kann. Die Fixierung muss auch so wirken, dass der untere Teil sich auch beim Ausschalen von dem einbetonierten Blech leicht lösen lässt.

Im Folgenden wird die Erfindung anhand von lediglich einen Ausführungsweg darstellenden Zeichnungen näher erläutert. Hierbei gehen aus den Zeichnungen und ihrer Beschreibung weitere Merkmale und Vorteile der Erfindung hervor.

Es zeigen:
- Figur 1:: schematisiert den Grundriss auf Bürogebäude mit einer Bürofläche
- Figur 2:: ein Schnitt durch die Anordnung nach Figur 1 in Pfeilrichtung II in Figur 1
- Figur 3:: die Draufsicht auf den luftführenden Teil mit der Anordnung nach Figur 2
- Figur 4:: ein vergrößerter Ausschnitt aus der Darstellung in Figur 2
- Figur 5:: eine Unteransicht einer metallenen nicht zur Erfindung gehörenden Akustikdecke bestehend aus insgesamt vier miteinander verbundenen Fertigteilplatten
- Figur 6:: Schnitt gemäß der Linie l in Figur 5
- Figur 7:: eine erste Variante der nicht zur Erfindung gehörenden Akustikdecke
- Figur 8:: eine zweite Variante der nicht zur Erfindung gehörenden Akustikdecke
- Figur 9:: eine dritte Variante der nicht zur Erfindung gehörenden Akustikdecke
- Figur 10:: eine vierte Variante der nicht zur Erfindung gehörenden Akustikdecke
- Figur 11:: der Schallabsorptionsgrad der vier Varianten V1-V4 nach den Figuren 7 bis 10
- Figur 12:: die perspektivische Unteransicht einer Vielzahl von miteinander verbundenen Fertigteilplatten mit dort integrierten Akustikabsorbern
- Figur 13:: ein Ausschnitt aus der Figur 12 mit der Darstellung der Anordnung der Längs- und Querschlitze für die Ausbildung der Akustikabsorber
- Figur 14:: die Unteransicht einer gegenüber Figur 12 abgewandelten Variante, bei der die Querschlitze fehlen
- Figur 15:: Schnitt durch einen Längsschlitz
- Figur 16:: ein Einsatzelement in Form eines Dämmkörpers für den Einsatz in den jeweiligen Längsschlitz nach Figur 15
- Figur 17:: ein Einsatzelement in den Längsschlitz in Form einer verlorenen Schalung
- Figur 18:: ein Einsatzelement in den Längsschlitz mit einem dort zur Luftverteilung angeordneten Textilschlauch

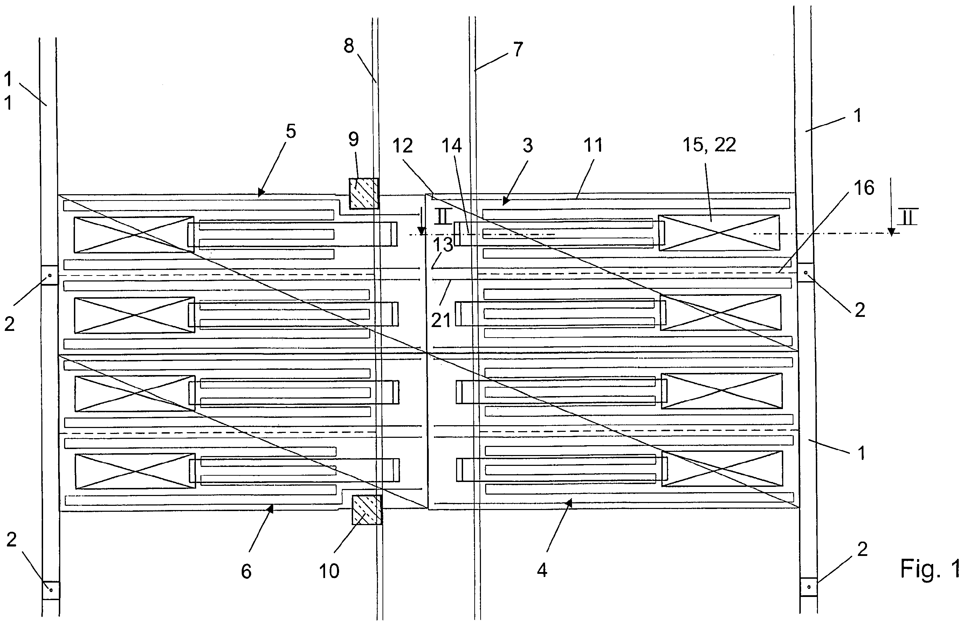

In Figur 1 ist die Draufsicht auf eine Etage in einem mit Fertigteilplatten 3, 4, 5, 6 ausgelegten Geschoss eines Gewerbe- oder Bürogebäudes dargestellt.

Die Fertigteilplatten 3-6 werden im Zwischenraum zwischen einer Fassade 1 verlegt, wobei Mittelstützen 9, 10 vorhanden sind.

Die links- und rechtsseitige Fassade 1 ist durch Pfosten 2 gebildet, zwischen den Pfosten sind Fassadenplatten verlegt.

Es ist nicht dargestellt, dass jede Fertigteilplatte 3, 4, 5 auch an der Fassadenseite auf Unterzügen aufgelegt sind, die in der Figur 1 nicht dargestellt sind. Gleiches gilt auch für die Flurseite, weil im Mittenbereich dieser Geschossdecke zwei einander gegenüberliegende Flurtrennwände 7, 8 angeordnet sind, die den Flur selbst ausbilden. Wichtig ist, dass das flurseitige Ende der Fertigteilplatten 3-6 in den Flur hinein ragt, sodass von dort aus die entsprechende Heizung und Klimatisierung stattfinden kann.

Jede Fertigteilplatte 3-6 ist mit einem zickzackförmig verlaufenden, in sich geschlossenen Rohrleitungsregister versehen, wobei jedes Rohrleitungsregister flurseitig Anschlüsse 12, 13 aufweist.

Über die Anschlüsse 12, 13 wird das Heiz- oder Kühlmedium in das jeweilige Rohrleitungsregister 11 eingeführt.

Um mehrere Räume klimatechnisch getrennt zu versorgen, ist vorgesehen, dass die Achsabstandslinie 16 die Platte halbiert und dass in jeder Fertigteilplatte 3 zwei getrennt voneinander temperierte Rohrleitungsregister 11, 21 angeordnet sind.

Auf diese Weise kann sichergestellt werden, dass eine Raumtrennung im Bereich der Achsabstandslinie 16 auf einer Fertigteilplatte 3 errichtet werden kann. Der eine Raum wird dann über das Rohrleitungsregister 11 temperiert, während der benachbarte Raum über das Rohrleitungsregister 21 temperiert wird.

Alle vorher beschriebenen Verhältnisse gelten auch für alle anderen Fertigteilplatten 4-6, so dass die vorliegende Erfindung auf die Beschreibung einer einzigen Fertigteilplatte 3 beschränkt ist.

Wichtig ist, dass von der Flurseite aus Luftführungskanäle 14 in die jeweilige Fertigteilplatte 3-6 hineinführen, wobei ebenfalls pro Fertigteilplatte 3 zwei Luftführungskanäle 14 vorhanden sind, um eben jeweils auch zwei getrennte Räume diesseits und jenseits der Achsabstandslinie 16 temperieren zu können.

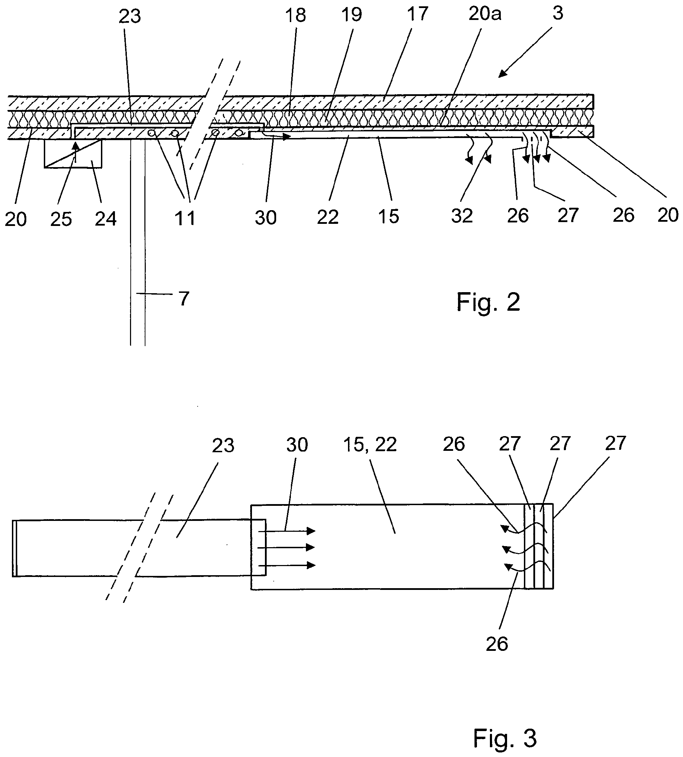

Der Aufbau einer solchen Lüftungseinrichtung ist in den Figuren 2 und 3 näher dargestellt.

Die Fertigteilplatte 3-6 besteht an ihrer Oberseite aus einer oberen Betonschale 17 mit einer Dicke von z. B. 10 cm.

An diese obere Betonschale schließt sich ein Hohlraum 18 mit einer Dicke von z.B. 12 cm an, der durch ein Dämmmaterial 19 ausgefüllt sein kann.

Daran schließt sich eine untere Betonschale 20 ebenfalls mit einer Dicke von z.B. 8 cm an.

Es ist in einer ersten Ausführungsform der Erfindung vorgesehen, dass jede Fertigteilplatte 3-6 fertig konfektioniert im Fertigteilwerk hergestellt wird und in der fertig gestellten Form nur noch auf der Geschossdecke verlegt wird, wie dies die Figur 1 zeigt.

In einer anderen Ausgestaltung der Erfindung ist es vorgesehen, dass lediglich die untere Betonschale 20 auf der Gehäusedecke gemäß Figur 1 aufgelegt wird und am Ort der Montage im Gebäude dann das Dämmmaterial 19 und die obere Betonschale 17 aufgebracht werden.

Der Einfachheit halber wird in der folgenden Beschreibung davon ausgegangen, dass die Fertigteilplatte 3-6 fertig konfektioniert entsprechend Figur 2 bereits schon hergestellt ist und so pro Geschossdecke verlegt wird.

Die Figur 2 zeigt die weiteren Einzelheiten des luftführenden Teils einer solchen Fertigteilplatte 3-6.

Wie bereits schon vorher erwähnt, ist gangseitig ein Verteilkanal 24 angeordnet, über den die zu temperierende Luft in Pfeilrichtung 25 in einen Luftkanal 23 einströmt, der im Zwischenraum zwischen der Oberseite der unteren Betonschale 20 und dem Hohlraum 18 geführt ist.

Damit ist sichergestellt, dass der Luftkanal 23 durch die in der unteren Betonschale 20 verlegten Rohrleitungsregister 11 aufgeheizt wird und somit die Luft in diesem Luftkanal 23 konfektioniert wird.

Diese Luft strömt nun in Pfeilrichtung 30 gemäß Figur 2 einer Ausnehmung 22, die in der unteren Betonschale 20 ausgebildet ist.

Diese Ausnehmung hat beispielsweise nur eine Höhe von 5 cm, so dass bei einer Gesamtdicke der Betonschale von 8 cm noch ein Steg der Betonschale 20 von
3 cm Stärke übrig bleibt.

Wichtig ist nun, dass diese Ausnehmung 22 deckenseitig nach vorne durch die erfindungsgemäße Funktionsplatte 15 abgedeckt ist, die bevorzugt aus einer mikroperforierten Metallplatte besteht.

Die temperierte Luft strömt somit in der Ausnehmung 22 entlang der Funktionsplatte 15 und temperiert diese, sodass eine Wärmestrahlung 32 nach unten (von der Deckenseite) in den Raum entsteht.

Wichtig ist ferner, dass die Luft, die in der Ausnehmung 22 strömt, lediglich in der Nähe der Fensterseite durch dort angeordnete Schlitzauslässe 27 in Pfeilrichtung 26 in den Raum hineinströmt.

Damit wird sowohl das jeweilige Fenster des Raumes bestrichen als auch an der Fensterseite eine besondere Kühl- oder Heizwirkung erzielt. Die durch die Fenster entstehende Strahlungsasymmetrie wird damit aufgehoben, weil an der Fensterseite der Luftstrom in Pfeilrichtung 26 über die möglicherweise eine Kältestrahlung abgebenden Fenster strahlt und diese temperiert.

Damit wird ein Luftschleier höherer Temperatur in Pfeilrichtung 32 auf eine in der Nähe des Fensters sitzende Person geleitet, was als sehr angenehm empfunden wird.

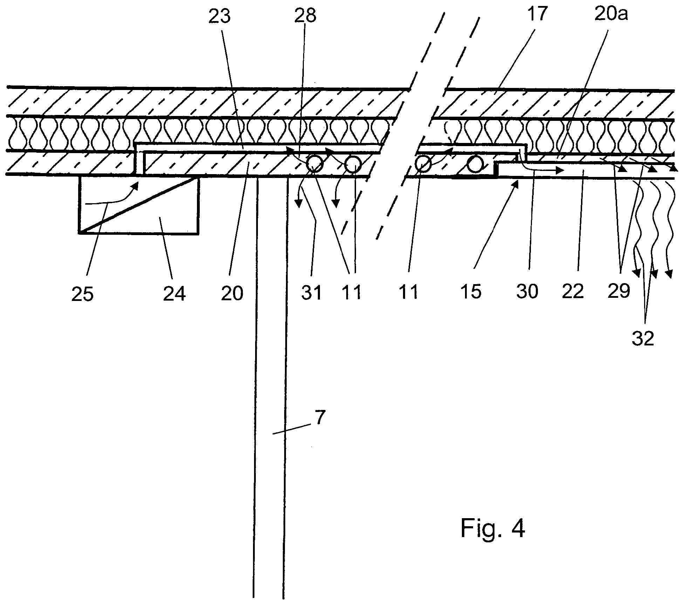

Die Figur 3 zeigt, dass der im Bereich der Betonschale 20 verlegte Luftkanal 23 relativ schmal ist und beispielsweise nur eine Breite von 40 cm und eine Länge von 3 m aufweist. Dies zeigt, dass damit gemäß Figur 4 von den Rohrleitungsregistern 11 in Pfeilrichtung 28 eine Wärmeübertragung in den Luftkanal 23 stattfindet, der somit temperiert wird.

Gleichzeitig geben jedoch auch die Rohrleitungsregister 11 ihre Wärme oder Kühlenergie in Pfeilrichtung 31 nach unten in den Raum ab, so dass hiermit ebenfalls eine Deckentemperierung über die untere Betonschale 20 erfolgt.

Wichtig ist ferner, dass im Bereich 20a der dünnen Betonschale 20 derartige Rohrleitungsregister 11 verlegt werden können. In diesem Fall würde eine entsprechende Temperierung ebenfalls zu einem Wärmeeintrag in Pfeilrichtung 29 in die Ausnehmung 22 erfolgen.

Vorteil der Erfindung ist, dass die erfindungsgemäße Multifunktionsplatte lediglich Abmessungen in Höhe von etwa 60 cm Breite und 2,10 m Länge aufweist, was ausreicht, eine entsprechende Deckentemperierung zu ermöglichen und gleichzeitig eine wesentliche Verbesserung des Schalldämmmaßes der Fertigteilplatte 3-6 zu bewirken.

Die Multifunktionsplatte besteht bevorzugt aus einem multiperforierten Blechmaterial. Anstatt einer solchen Ausbildung kann auch ein Lochblech verwendet werden, welches größere Löcher im Bereich von z. B. 1 bis 5 mm aufweisen kann.

Ferner ist es möglich, die Deckenseite oder auch die Rückseite der Funktionsplatte mit einem entsprechenden Schalldämmmaterial zu beschichten. Solches Schalldämmmaterial ist z. B. ein Kautschukmaterial, ein Flies oder ein anderes Material.

In einer anderen Ausgestaltung kann die Funktionsplatte auch aus einem Holzmaterial bestehen, insbesondere aus einer mehrfach verleimten Spanplatte (Multiplex) besteht.

Ebenso kann statt des Metall- oder Holzmaterials ein Schichtwerkstoff verwendet werden, wie z. B. eine Sandwichplatte, die aus einer Kombination von Holz und Kunststoffschichten besteht.

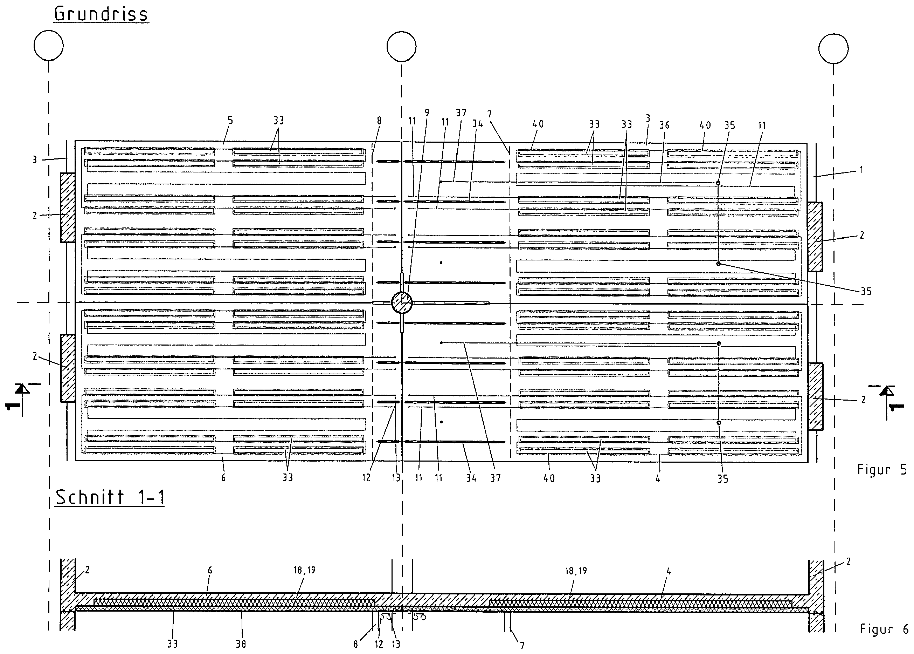

In den Figuren 5 und 6, sowie in allen folgenden Figuren sind für die gleichen Teile die gleichen Bezugszeichen eingetragen. Deshalb gelten auch für die gleichen Bezugszeichen die vorher erwähnten Erläuterungen

In Figur 5 ist die Unteransicht einer aus mehreren Fertigteilplatten 3, 4, 5, 6 bestehenden Akustikabsorberdecke gezeigt, wo erkennbar ist, dass im Rastermaß eine Vielzahl von parallel zueinander angeordneten und einen gegenseitigen Abstand voneinander einnehmenden Längsschlitzen 33 angeordnet sind.

Die Längsschlitze haben etwa einen Abstand von etwa kleiner als 20 Zentimeter und eine Länge von z. B. 2,60 Meter.

Am Beispiel der rechten Fertigteilplatte 3 ist somit erkennbar, dass in Längsrichtung (von der Flurzone 39 in Richtung auf die Fassade 1 gerichtet) eine Vielzahl von Längsschlitzen 33 angeordnet sind, die jedoch zwischen sich Unterbrechungs-bereiche aufweisen.

Die Unterbrechungsbereiche in Längsrichtung sind jedoch nur aus fertigungstechnischen Gründen vorgesehen, weil es andernfalls nicht möglich ist, bei durchgehenden Querschlitzen mit einer Länge von z. B. 5 oder 6 Metern die entsprechenden Blechprofile in Form der Lochbleche 38 durchgehend anzubringen, weil dies einen erheblichen Fertigungsaufwand beinhaltet.
Aus diesem Grund gibt es die in Längsrichtung in Figur 5 oben rechts gezeigten Unterbrechungsbereiche, die jedoch nicht lösungsnotwendig sind.

In einer anderen Ausgestaltung kann es auch vorgesehen sein, dass diese Bereiche der Längsschlitze durchgehend sind, d. h. von der Flurtrennwand 7 ausgehend in Richtung zur Fassade 1 können die Längsschlitze 33 auch durchgehend ausgebildet sein.
In Figur 5 ist noch dargestellt, dass im Bereich der Flurzone in den dort angeordneten Fertigteilplatten Ankerschienen 34 eingelassen sind, die zur Abhängung und Halterung z. B. eines Flurkoffers 42 dienen, der dort als luftführendes Element angeordnet ist und der gleichzeitig die Elektro- und Lüfungs-leitungen sowie alle Sanitärleitungen aufnimmt.

Ebenso können an den Ankerschienen 34 auch noch andere Gegenstände abgehängt werden, wie z. B. Hinweisschilder, Elektrodosen und alle sonstigen Funktionsteile, die an den Deckenelementen verankert werden können.
Es ist in der Darstellung erkennbar, dass die Rohrleitungsregister 11, die ein Kühlmedium oder ein Heizmedium führen, außerhalb der Längsschlitze in der jeweiligen Fertigteilplatte 3-6 integriert verankert sind und in wärmeleitendem Kontakt mit den Längsschlitzen 33 bzw. den dort angeordneten Funktionselementen stehen.

Auf diese Weise wird eine ausgezeichnete Wärmeübertragung der Wärme oder Kälte in den Rohrleitungsregistern 11 auf die in den Längsschlitzen 33 verlegten Funktionsteile übertragen.

Es ist ferner noch gezeigt, dass in den Fertigteilplatten 3-6 Elektrodosen 35 eingelassen sind, die mit entsprechenden Leerrohren 37 und Zuleitungen 36 z. B. in die Flurzone 39 geführt sind.

Ebenso ist dargestellt, dass die Rohrleitungsregister 11 mit ihren Anschlüssen 12 in der Flurzone 39 geführt sind und gemäß Figur 6 können noch weitere Rohre vorhanden sein, um die Flüssigkeitszufuhr zu den Anschlüssen 12, 13 der Rohr-leitungsregister 11 zu steuern

Wichtig ist nun, dass die Längsschlitze erfindungsgemäß als Akustikabsorber 40 ausgebildet sind, wie nachfolgend anhand der Zeichnungen näher beschrieben wird.

In Figur 6 ist erkennbar, dass sich jeder Längsschlitz als einseitig offene Nut in den Querschnitt der jeweiligen Fertigteilplatte 3-6 erstreckt und z. B. eine Tiefe von 4 Zentimeter aufweist.

Wichtig ist, dass der untere, raumzugewandte Teil des Längsschlitzes 33 durch ein Lochblech 38 abgedeckt ist.

Für die Ausbildung des Lochbleches gibt es jedoch unterschiedliche Ausführungs-formen, so dass der Begriff "Lochblech" im Sinne der vorliegenden Erfindung weit aufgefasst werden kann.

Das Lochblech besteht bevorzugt aus einer dünnen Metallplatte mit einer Anzahl von Bohrungen, die in der Lage sind, die Luft ausreichend durch das Lochblech hindurchströmen zu können.

Statt einer Metallplatte mit geeigneten Lochquerschnitten können jedoch auch andere Materialien verwendet werden, wie z. B. Kunststoffplatten, Papierplatten, Gipsplatten, Gipskartonplatten, Holzverbundwerkstoffe, Metallkunststoffverbundwerkstoffe und dergleichen mehr.

Es ist nicht lösungsnotwendig, dass die luftführenden Bohrungen in dem Lochblech rund ausgebildet sind. Sie können jede beliebige Profilform aufweisen. Es kann sich um ovale Lochungen handeln, um dreieckige, rechteckige, quadratische oder anders geformte Lochungen.

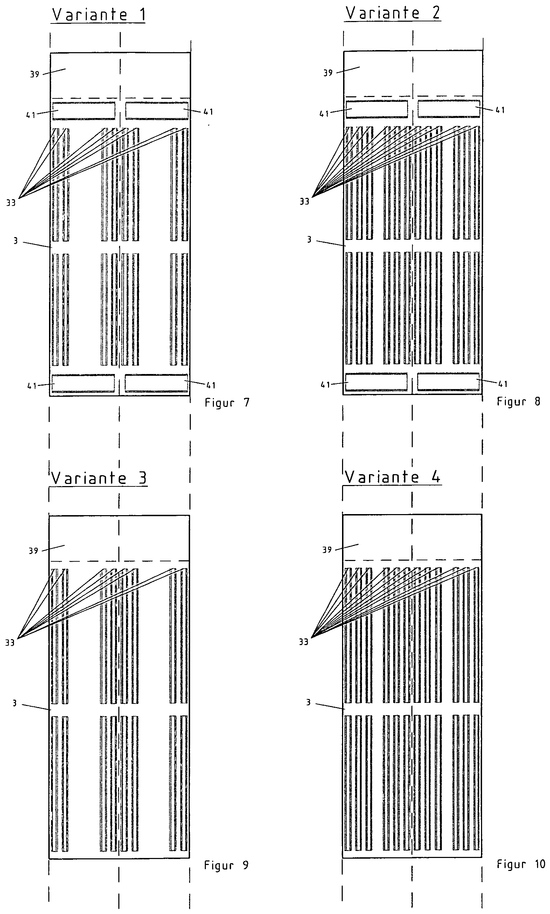

Die Figuren 7 bis 10 zeigen vier verschiedene Varianten V1-V4 der erfindungsgemäßen Akustikabsorberdecke, wobei die Variante 1 nach Figur 7 eine Fertigteilplatte zeigt, in deren Rasterbereich jeweils nur zwei Längsschlitze 33 paarweise angeordnet sind und insgesamt in einem Rasterbereich vier derartiger Längsschlitze 33 angeordnet sind.

Hieraus bilden sich relativ große Zwischenräume zwischen den Längsschlitzen 33 und eine solche Variante ist vor allem für Fälle geeignet, wo es nicht auf hohe Absorptionsgrade ankommt.

Wichtig ist, dass die jeweiligen Stirnseiten der Längsschlitze 33 luftführend mit den quer dazu verlegten größervolumigen Querschlitzen 41 verbunden sind.

Auch die Querschlitze 41 sind mit zugeordneten Lochblechen 38 abgedeckt, aus denen ebenfalls die Luft strömt.

Die Variante zwei nach Figur 8 zeigt hingegen, dass die Dichte der Querschlitze 33 wesentlich erhöht werden kann, so dass nur noch geringfügige Zwischenbereiche vorhanden sind, die nicht durch die Längsschlitze 33 gebildet sind.

Eine solche Akustikdecke hat ein sehr hohes Schallschutzmaß, wie anhand der Figur 11 näher erläutert wird. Auch dort sind Querschlitze 41 vorgesehen.

Die Variante drei nach Figur 9 zeigt die gleiche Ausbildung wie die Figur 7, nur dass die vorher gezeigten Querschlitze 41 auch entfallen können.

Die Variante vier nach Figur 10 zeigt die gleiche Ausbildung nach Figur 8, nur dass ebenfalls dort die Querschlitze 41 entfallen sind. In den Varianten nach Fig. 9 und 10 ist dafür die wirksame Länge der Längsschlitze 33 mit den dazugehörenden Akustikabsorbern 40 länger ausgebildet.

Die Figur 11 zeigt die Schallabsorptionsgrade der vorherigen erwähnten vier Varianten V1-V4, wobei auf der Ordinate der Schallabsorptionsgrad α und auf der Abszisse die Frequenz in Hertz aufgetragen ist.

Es ist daraus erkennbar, dass die Variante V2 den höchsten Schallabsorptionsgrad hat, während dicht davon gefolgt die Variante V4 einen etwas niedrigeren Schallabsorptionsgrad aufweist. Es ist ferner erkennbar, dass der beste Schallabsorptionsgrad in dem (für das menschliche Ohr) empfindlichen Hörbereich zwischen 500 Hertz und 1 Kilohertz liegt, wodurch die besondere Effektivität der erfindungsgemäßen Schallabsorptionsdecke bewiesen ist.

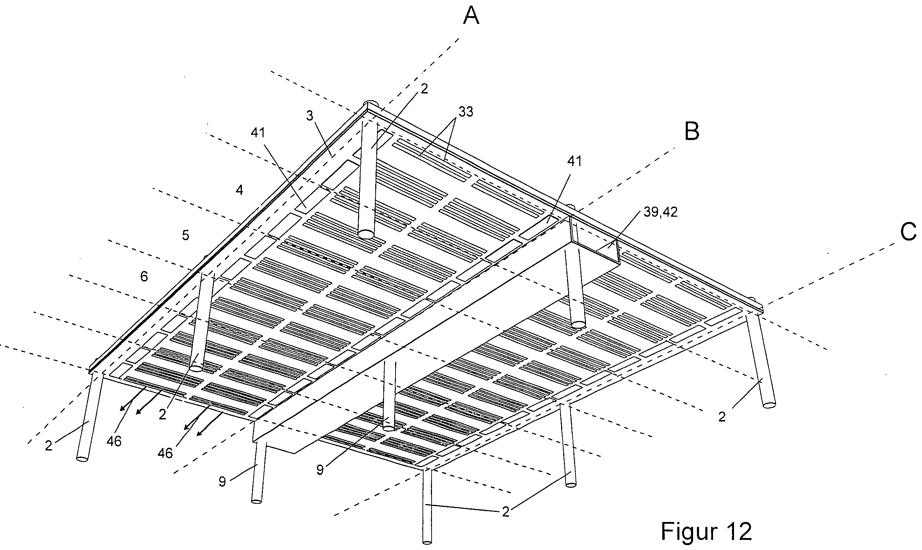

Die Figur 12 zeigt die perspektivische Unteransicht einer derartigen aus einer Vielzahl von Fertigteilplatten 3-6 zusammengesetzten Akustikdecke, wo auch erkennbar ist, dass in der Flurzone 39 ein Flurkoffer 42 angeordnet ist, der von den Pfosten 9 durchsetzt ist.

Ferner ist dort erkennbar - und nur zeichnerisch unvollständig angedeutet - dass aus allen Längsschlitzen 33 und auch den dort gezeigten Querschlitzen 41 die Luft in Pfeilrichtung 46 in Richtung nach unten in den Raum hinein strömt.

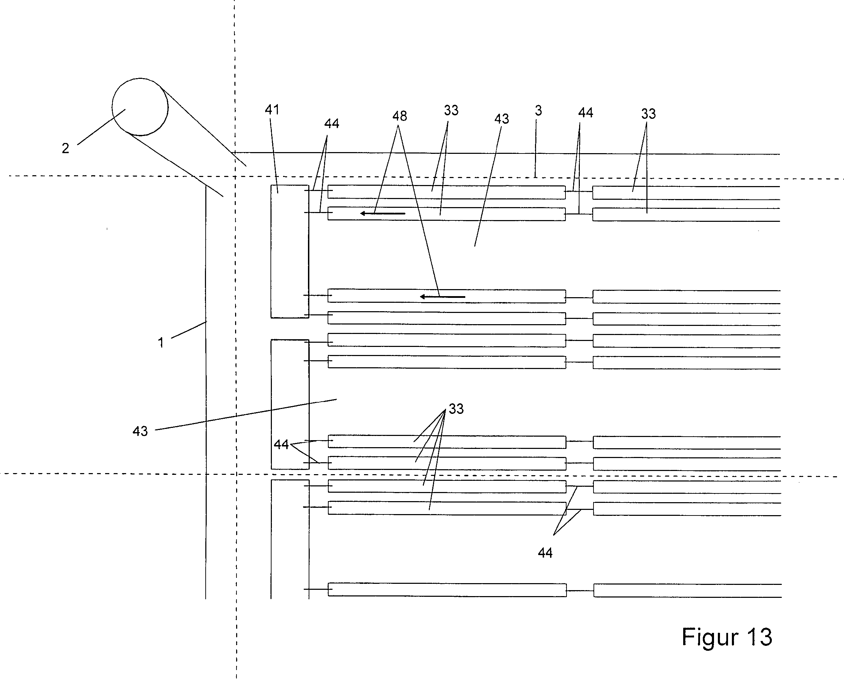

Figur 13 zeigt eine vergrößerte Ansicht der Darstellung nach Figur 12, wo erkennbar ist, dass die Längsschlitze 33 über im Beton der Fertigteilplatte 3-6 verlegte luftschlüssige Verbindungen 44 miteinander verbunden sind, so dass die dort strömende Luft in den Pfeilrichtungen 48 entlangströmt und hierbei auch die Querschlitze 41 durchsetzt und aus diesen senkrecht nach unten in den Raum hineinströmt.

Es ist ferner erkennbar, dass der Zwischenraum 43 der jeweiligen Fertigteilplatte 3-6 nicht von den Längsschlitzen 33 und den Querschlitzen 41 durchsetzt ist.

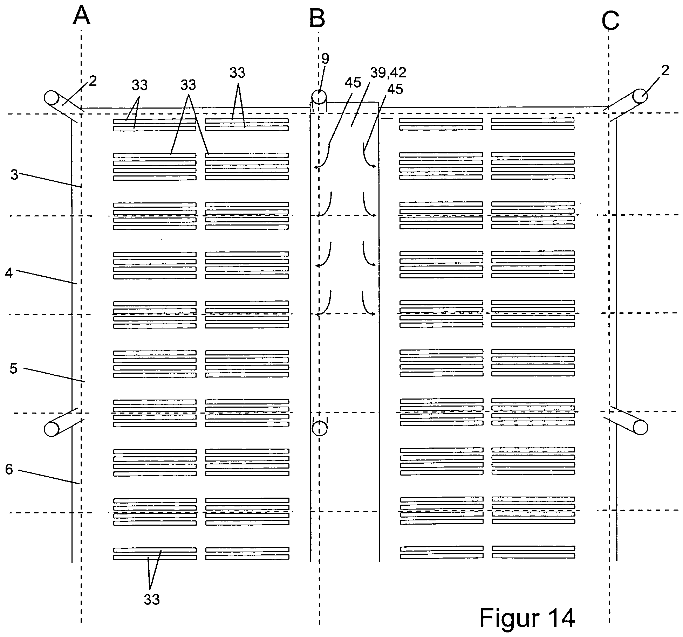

Die Figur 14 zeigt die Luftführung von dem in der Flurzone 39 angeordneten Flurkoffer 42, wo die Luft über zugeordnete Luftzuführungskanäle in die luftschlüssig daran anschließenden Längsschlitze 33 einströmt, was in Pfeilrichtung 45 geschieht.

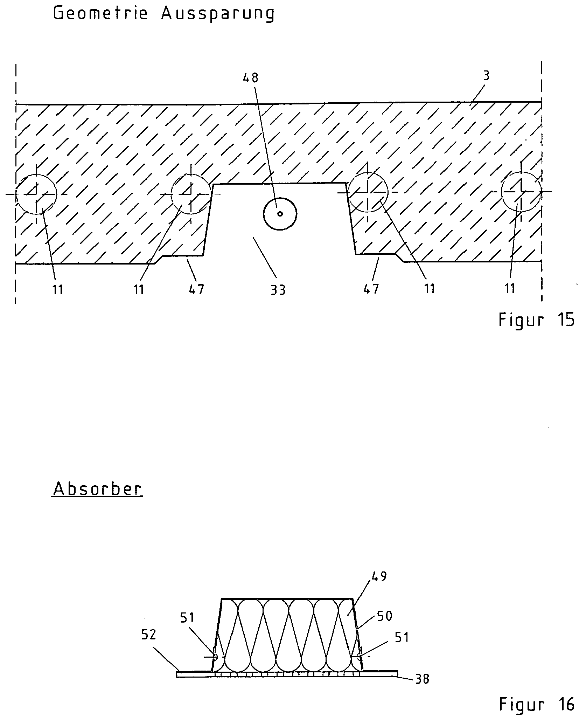

Die Luft strömt über die gesamte Länge der Längsschlitze 33 aus, wobei gemäß Figur 15 jeder Längsschlitz 33 aus einem etwa trapezförmigen Profil besteht, welches in die Fertigteilplatte 3 durch einen Schalungskörper eingebracht wurde. Die Profilform ergibt sich durch die leichte Entformbarkeit des Schalkörpers.

Somit strömt die Luft in Pfeilrichtung 48 in Längsrichtung in diesem Längsschlitz 33 entlang.

Ferner ist erkennbar, dass das Rohrleitungsregister 11 in wärmeleitender Verbindung mit den Wandungen des Längsschlitzes 33 steht, so dass eine ausgezeichnete Wärmeübertragung auf den Hohlraum des Längsschlitzes erfolgen kann.

Damit erwärmen oder kühlen sich die Wandungen des Längsschlitzes 33 entsprechend der Temperatur des in dem Rohrleitungsregister 11 geführten Wärme- oder Kälteträgermediums und die dort in dem Querschnitt des Längsschlitzes 33 geführt Luft nimmt somit sehr schnell die Temperatur des Wärme- oder Kälteträger-mediums in dem Rohrleitungsregister 11 an.

Die Figur 16 zeigt eine Alternative, bei der wahlweise in die Längsschlitze 33 ein sich bevorzugt über die gesamte Länge des Längsschlitzes erstreckender Dämmkörper 49 eingesetzt ist, der aus einem Hutprofil 50 besteht, dessen Innenraum mit dem Dämmstoff ausgefüllt ist.

Für diesen Fall ist es dann bei dem so ausgefüllten Längsschlitz 33 nicht mehr vorgesehen, dass durch diesen die Luft in Pfeilrichtung 48 fließt. Vielmehr dient dieser Dämmkörper 49 zur weiteren Verbesserung des Schalldämmmaßes der jeweiligen Längsschlitze 33.

Es können also abwechselnd oder in beliebiger Reihenfolge Längsschlitze 33 zur Luftführung in Pfeilrichtung 48 herangezogen werden und andere Längsschlitze werden zusätzlich mit dem Dämmkörper 49 und dem Hutprofil 50 ausgefüllt, um dort das Schalldämmmaß noch weiter zu verbessern.

Es ist außerdem erkennbar, dass das Hutprofil 50, welches aus einem trapezförmigen Profil aus Metall oder Kunststoff besteht, mit Hilfe von Verbindungen 51 an der Innenwandung des Längsschlitzes 33 befestigt wird.

Ferner ist wichtig, dass auch bei Anwendung solcher Dämmkörper 49 mit dem Hutprofil 50 die Unterseite durch ein Lochblech 38 abgedeckt wird, ohne dass durch dieses Lochblech Luft herausströmt.

Der Profilschenkel 52 des Lochbleches passt im Übrigen genau in den Rücksprung 47 an der Unterseite der Fertigteilplatte 3 gemäß Figur 15, so dass das Lochblech formschlüssig mit der Unterseite der Fertigteilplatte 3 abschließt.

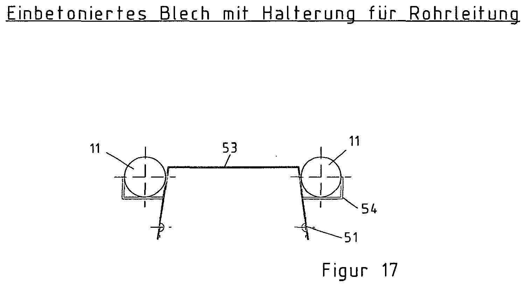

Die Figur 17 zeigt einen Einsatzkörper der dann verwendet wird, wenn der Längsschlitz 33 für die Luftführung herangezogen wird. Dieser Einsatzkörper besteht aus einer verlorenen Schalung, die bevorzugt als Blechprofil 43 ausgebildet ist und deren Profil dem Profil des Längsschlitzes 33 angepasst ist.

An diesem Blechprofil 53 sind seitliche Halteschenkel 54 zur Aufnahme der Rohrleitungsregister 11 angeordnet. Auf diese Weise überträgt die Außenseite der Rohrleitungsregister 11 die dort entstehende Wärme oder Kälte in wärmeleitender Verbindung über den Halteschenkel 54 auf das Blechprofil 53, so dass damit die gesamte Innenwandung des Längsschlitzes 33 entsprechend gekühlt oder geheizt wird. Es kommt hier dadurch zu einer sehr schnellen Wärmeübertragung und zu einer schnell wirkenden Luftheizung- oder Kühlung.

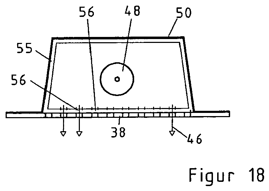

Die Figur 18 zeigt, dass in den Innenraum eines solchen Blechprofils 53 zur weiteren Verbesserung der Luftführung ein perforierter Schlauch 55 eingesetzt werden kann, der bevorzugt als Textilschlauch ausgebildet ist, der im Wesentlichen luftundurchlässig ist und der nur an seiner unteren Ausströmseite eine Vielzahl von Öffnungen 56 aufweist, durch welche die Luft in Pfeilrichtung 46 ausströmt und die Öffnungen in dem Lochblech 38 durchsetzt.

Durch die Anordnung eines solchen textilen Schlauches 55 wird das Schalldämm-maß noch weiter wesentlich verbessert, denn der Schlauch ist "akustik-weich", d. h. er wirkt selbst als Schalldämmkörper und kann trotzdem für die Luftführung herangezogen werden.

Die Erfindung ist nicht auf die Anordnung von entsprechenden luftführenden Kanälen oder Dämmkörpern in den Längsschlitzen 33 und den Querschlitzen 41 beschränkt. Ebenso können in den Längsschlitzen 33 noch andere Befestigungsmittel angeordnet werden, wie z. B. Aufhängepunkte für Lampen, Steckdosen, Computeranschlüsse, und dergleichen mehr. Hieraus ergibt sich, dass die Längsschlitze nicht nur luftführende oder dämmende Aufgabe haben, sondern noch zusätzlich Befestigungsflächen für an der Fertigteilplatte anzubringende Befestigungspunkte darstellen.

**Zeichnungslegende**

| | | | |
|---|---|---|---|
| 1 | Fassade | 8 | Flurtrennwand |
| 2 | Pfosten | 9 | Mittelstütze |
| 3 | Fertigteilplatte | 10 | Mittelstütze |
| 4 | Fertigteilplatte | 11 | Rohrleitungsregister |
| 5 | Fertigteilplatte | 12 | Anschluss |
| 6 | Fertigteilplatte | 13 | Anschluss |
| 7 | Flurtrennwand | 14 | Lüftungskanal |
| 15 | Funktionsplatte | 35 | Elektrodose |
| 16 | Achsabstandslinie | 36 | Zuleitung |
| 17 | Betonschale | 37 | Leerrohr |
| 18 | Hohlraum | 38 | Lochblech |
| 19 | Dämmmaterial | 39 | Flurzone |
| 20 | Betonschale (untere) 20a Bereich | 40 | Akustikabsorber |
| | | 41 | Querschlitze |
| 21 | Rohrleitungsregister | 42 | Flurkoffer |
| 22 | Ausnehmung (in Platte 20) | 43 | Zwischenraum |
| | | 44 | luftschlüssige Verbindung |
| 23 | Luftkanal | 45 | Pfeilrichtung (Luft) |
| 24 | Verteilkanal | 46 | Pfeilrichtung (Luft) |
| 25 | Pfeilrichtung | 47 | Rücksprung |
| 26 | Pfeilrichtung | 48 | Pfeilrichtung (Luft) |
| 27 | Schlitzauslass | 49 | Dämmkörper |
| 28 | Pfeilrichtung | 50 | Hutprofil |
| 29 | Pfeilrichtung | 51 | Verbindung |
| 30 | Pfeilrichtung | 52 | Profilschenkel |
| 31 | Pfeilrichtung | 53 | Blechprofil |
| 32 | Wärmestrahlung | 54 | Halteschenkel |
| 33 | Längsschlitz | 55 | perforierter Schlauch |
| 34 | Ankerschiene | 56 | Öffnung |

## Patentansprüche

1. Thermoaktive Fertigteilplatte bestehend aus zwei parallel zu einander angeordneten Betonschalen (17, 20) zwischen denen ein Hohlraum (18) angeordnet ist, der von einem Dämmmaterial (19) ausgefüllt ist, wobei in mindestens einer der beiden Betonschalen (17, 20) mindestens ein Rohrleitungsregister (21) angeordnet ist, welches von einem temperierten Medium durchflossen ist, wobei mindestens eine, die raumseitige Oberfläche der Fertigteilplatte unterbrechende halboffene Ausnehmung (22) in der Betonschale (20) der Fertigteilplatte angeordnet ist, die raumseitig von einer Funktionsplatte (15) abgedeckt ist, die aus einem schalldämmenden Material besteht, **dadurch gekennzeichnet, dass** in der Fertigteilplatte Luftkanäle (23) angeordnet sind, deren Längsachsen sich parallel zur Längsachse der Fertigteilplatte erstrecken, und der durch die Luftkanäle (23) geleitete Luftstrom in den zu temperierenden Raum einleitbar ist und dass der jeweilige Luftkanal(23) luftschlüssig mit mindestens einer Ausnehmung (22) in der Betonschale (20) der Fertigteilplatte verbunden ist, die raumseitig von der Funktionsplatte abgedeckt ist, die luftführende Bohrungen aufweist.

2. Fertigteilplatte nach Anspruch 1, **dadurch gekennzeichnet, dass** die Funktionsplatte (15) die deckenseitige flache Ausnehmung (22) in der unteren Betonschale (20) deckenbündig abdeckt.

3. Fertigteilplatte nach Anspruch 1 oder 2, **dadurch gekennzeichnet, dass** die Funktionsplatte (15) aus einer mikroperforierten Metallplatte besteht.

4. Fertigteilplatte nach Anspruch 1 oder 2, **dadurch gekennzeichnet, dass** die Funktionsplatte aus Kunststoff oder Papier oder Gips oder Gipskarton oder Holz oder Holzverbund oder Metallverbund besteht.

5. Fertigteilplatte nach einem der Ansprüche 1 bis 4, **dadurch gekennzeichnet, dass** bezogen auf eine Fläche von etwa 100 % einer Fertigteilplatte, die Funktionsplatte (15) etwa eine Fläche von 20 % der Fläche der Fertigteilplatte einnimmt.

6. Fertigteilplatte nach einem der Ansprüche 1 bis 5, **dadurch gekennzeichnet, dass** die in den Zwischenraum zwischen der Funktionsplatte (15) und der unteren Betonschale einströmende Luft lediglich nur noch in der Nähe der fassadenseitig angeordneten Fenster durch Schlitzauslässe (27) ausströmt.

7. Fertigteilplatte nach einem der Ansprüche 1 bis 6, **dadurch gekennzeichnet, dass** in der Fertigteilplatte gangseitig ein Verteilkanal (24) angeordnet, über den die zu temperierende Luft in Pfeilrichtung (25) in einen Luftkanal (23) einströmt, der im Zwischenraum zwischen der Oberseite der unteren Betonschale (20) und dem Hohlraum (18) geführt ist.

8. Fertigteilplatte nach einem der Ansprüche 1 bis 7, **dadurch gekennzeichnet, dass** in der zur Raumseite gerichteten Oberfläche der Betonschale (20) eine Mehrzahl von halboffenen Längsschlitzen (33) angeordnet sind, deren Öffnung raumseitig abgedeckt ist.

9. Fertigteilplatte nach Anspruch 8, **dadurch gekennzeichnet, dass** die Längsschlitze (33) die temperierte Luft führen und dass die jeweiligen Stirnseiten der Längsschlitze (33) luftführend mit quer hierzu verlegten größervolumigen Querschlitzen 41 verbunden sind.

10. Fertigteilplatte nach einem der Ansprüche 1 bis 9, **dadurch gekennzeichnet, dass** die Längsschlitze (33) parallel und in gegenseitigem Abstand zueinander in der Oberfläche der raumseitigen Betonschale (20) angeordnet sind.

11. Fertigteilplatte nach einem der Ansprüche 1 bis 10, **dadurch gekennzeichnet, dass** mindestens in einem Teil der Längsschlitze (33) Akustikabsorber (40) aufgenommen sind.

12. Fertigteilplatte nach einem der Ansprüche 1 bis 11, **dadurch gekennzeichnet, dass** die Akustikabsorber (40) als Dämmkörper (49) ausgebildet sind.

13. Fertigteilplatte nach einem der Ansprüche 1 bis 12, **dadurch gekennzeichnet, dass** in dem halboffenen Profil der Längsschlitze (33) luftführende Einsatzkörper (53, 54, 55) angeordnet sind.

14. Fertigteilplatte nach Anspruch 13, **dadurch gekennzeichnet, dass** der luftführende Einsatzkörper als perforierter Schlauch (55) ausgebildet ist.

## Claims

1. Thermoactive pre-assembled plate consisting of two concrete shells (17, 20) arranged parallel to each other, between which is arranged a cavity (18) which is filled with an insulating material (19), wherein in at least one of the two concrete shells (17, 20) is arranged at least one pipe register (21) through which a temperature-controlled medium flows, wherein at least one half-open recess (22) which interrupts the surface of the pre-assembled plate on the room side is arranged in the concrete shell (20) of the pre-assembled plate, which recess (22) is covered on the room side by a function plate (15) which is made of a sound-insulating material, **characterised in that** in the pre-assembled plate are arranged air ducts (23) of which the longitudinal axes extend parallel to the longitudinal axis of the pre-assembled plate, and the air stream conducted through the air ducts (23) can be introduced into the room of which the temperature is to be controlled and **in that** the respective air duct (23) is airtightly connected to at least one recess (22) in the concrete shell (20) of the pre-assembled plate which is covered on the room side by the function plate which has air-conducting bores.

2. Pre-assembled plate according to claim 1, **characterised in that** the function plate (15) covers the flat recess (22) on the ceiling side in the lower concrete shell (20) so as to lie flush with the ceiling.

3. Pre-assembled plate according to claim 1 or 2, **characterised in that** the function plate (15) consists of a microperforated metal plate.

4. Pre-assembled plate according to claim 1 or 2, **characterised in that** the function plate is made of plastic or paper or plaster or plasterboard or wood or wood composite or metal composite.

5. Pre-assembled plate according to one of claims 1 to 4, **characterised in that**, referred to an area of approximately 100% of a pre-assembled plate, the function plate (15) occupies an area of approximately 20% of the area of the pre-assembled plate.

6. Pre-assembled plate according to one of claims 1 to 5, **characterised in that** the air which flows into the gap between the function plate (15) and the lower concrete shell flows out through slot outlets (27) only in the vicinity of the windows arranged on the façade side.

7. Pre-assembled plate according to one of claims 1 to 6, **characterised in that** in the pre-assembled plate on the passageway side is arranged a distribution duct (24) via which the air of which the temperature is to be controlled flows in arrow direction (25) into an air duct (23) which extends in the gap between the upper side of the lower concrete shell (20) and the cavity (18).

8. Pre-assembled plate according to one of claims 1 to 7, **characterised in that** in the surface of the concrete shell (20) directed towards the room side are arranged a plurality of half-open longitudinal slots (33) of which the openings are covered on the room side.

9. Pre-assembled plate according to claim 8, **characterised in that** the longitudinal slots (33) conduct the temperature-controlled air and **in that** the respective ends of the longitudinal slots (33) are connected in air-conducting relationship to transverse slots (41) of larger volume laid transversely thereto.

10. Pre-assembled plate according to one of claims 1 to 9, **characterised in that** the longitudinal slots (33) are arranged parallel and spaced apart from each other in the surface of the concrete shell (20) on the room side.

11. Pre-assembled plate according to one of claims 1 to 10, **characterised in that** acoustic absorbers (40) are held in at least some of the longitudinal slots (33).

12. Pre-assembled plate according to one of claims 1 to 11, **characterised in that** the acoustic absorbers (40) are designed as insulating bodies (49).

13. Pre-assembled plate according to one of claims 1 to 12, **characterised in that** air-conducting insert bodies (53, 54, 55) are arranged in the half-open profile of the longitudinal slots (33).

14. Pre-assembled plate according to claim 13, **characterised in that** the air-conducting insert body is designed as a perforated hose (55).

## Revendications

1. Plaque semi-finie thermoactive composée de deux plaques de béton (17, 20) parallèles entre lesquelles est disposée une cavité (18) remplie d'un matériau insonorisant (19), dans laquelle il est prévu dans l'une au moins des deux couches de béton (17, 20) au moins un registre de canalisation (21) qui est traversé par un agent tempéré, et il est prévu dans la couche de béton (20) de la plaque semi-finie au moins un creux semi-ouvert (22) qui interrompt la surface, située côté espace, de la plaque semi-finie et qui est couvert côté espace par une plaque fonctionnelle (15) composée d'un matériau insonorisant,
**caractérisée en ce qu'**il est prévu dans la plaque semi-finie des conduits d'air (23) dont les axes longitudinaux s'étendent parallèlement à l'axe longitudinal de la plaque semi-finie, et le courant d'air qui traverse les conduits d'air (23) est apte à être introduit dans l'espace à tempérer, et **en ce que** le conduit d'air respectif (23) est relié de manière étanche à l'air à au moins un creux (22) prévu dans la couche de béton (20) de la plaque semi-finie qui est couverte côté espace par la plaque fonctionnelle (15), qui présente des perçages de passage d'air.

2. Plaque semi-finie selon la revendication 1, **caractérisée en ce que** la plaque fonctionnelle (15) couvre dans le même plan que le recouvrement le creux plat (22), situé côté recouvrement, prévu dans la couche de béton inférieure (20).

3. Plaque semi-finie selon la revendication 1 ou 2, **caractérisée en ce que** la plaque fonctionnelle (15) se compose d'une plaque métallique microperforée.

4. Plaque semi-finie selon la revendication 1 ou 2, **caractérisée en ce que** la plaque fonctionnelle se compose de matière plastique ou de papier ou de plâtre ou de placoplâtre ou de bois ou de composite de bois ou de composite de métal.

5. Plaque semi-finie selon l'une des revendications 1 à 4, **caractérisée en ce que** par rapport à une surface d'environ 100 % d'une plaque semi-finie, la plaque fonctionnelle (15) occupe environ une surface qui représente 20 % de la surface de ladite plaque semi-finie.

6. Plaque semi-finie selon l'une des revendications 1 à 5, **caractérisée en ce que** l'air qui entre dans l'espace intermédiaire entre la plaque fonctionnelle (15) et la couche de béton inférieure ne sort plus que près des fenêtres disposées côté façade, par des fentes de sortie (27) .

7. Plaque semi-finie selon l'une des revendications 1 à 6, **caractérisée en ce qu'**il est prévu dans la plaque semi-finie, côté couloir, un conduit de distribution (24) par lequel l'air à tempérer entre dans le sens de la flèche (25) dans un conduit d'air (23) qui passe dans l'espace intermédiaire entre le côté supérieur de la couche de béton inférieure (20) et la cavité (18).

8. Plaque semi-finie selon l'une des revendications 1 à 7, **caractérisée en ce qu'**il est prévu dans la surface de la couche de béton (20) dirigée vers le côté espace plusieurs fentes longitudinales semi-ouvertes (33) dont l'ouverture est couverte côté espace.

9. Plaque semi-finie selon la revendication 8, **caractérisée en ce que** les fentes longitudinales (33) guident l'air tempéré, et **en ce que** les côtés frontaux respectifs des fentes longitudinales (33) sont reliés pour un guidage d'air à des fentes transversales (41) de plus grand volume qui sont prévues transversalement par rapport auxdites fentes (33).

10. Plaque semi-finie selon l'une des revendications 1 à 9, **caractérisée en ce que** les fentes longitudinales sont parallèles et espacées, dans la surface de la couche de béton (20) située côté espace.

11. Plaque semi-finie selon l'une des revendications 1 à 10, **caractérisée en ce que** des absorbeurs acoustiques (40) sont logés dans une partie au moins des fentes longitudinales (33).

12. Plaque semi-finie selon l'une des revendications 1 à 11, **caractérisée en ce que** les absorbeurs acoustiques (40) sont conçus comme des corps insonorisants (49).

13. Plaque semi-finie selon l'une des revendications 1 à 12, **caractérisée en ce qu'**il est prévu dans le profil semi-ouvert des fentes longitudinales (33) des corps d'insertion de guidage d'air (53, 54, 55).

14. Plaque semi-finie selon la revendication 13, **caractérisée en ce que** le corps d'insertion de guidage d'air est conçu comme un tuyau perforé (55).
